# FASCICULE DE BREVET EUROPEEN

(11) **EP 2 503 208 B1**
(45) Date de publication et mention de la délivrance du brevet: **22.05.2013**
(21) Numéro de dépôt: 12305293.8
(22) Date de dépôt: 13.03.2012
(51) Int. Cl.: F16L 55/40

(54) **Système d'entretien de la paroi intérieure d'une conduite et procédé de mise en oeuvre**
Vorrichtung und Verfahren zur Wartung einer Rohrinnenfläche.
System for maintenance of inner conduit surface and related process

(30) Priorité: 23.03.2011 FR 1152419
(43) Date de publication de la demande: 26.09.2012
(73) Titulaire: Entreprise Philippe Lassarat, 76600 Havre (FR)
(72) Inventeur: Sion, Patrick, 84360 Lauris (FR)
(74) Mandataire: Coralis Harle

(56) Documents cités:
- EP-A1- 0 378 480
- EP-A2- 1 245 692
- FR-A1- 2 638 813

## Description

La présente invention concerne un système d'entretien de la paroi intérieure d'une conduite ainsi qu'un procédé de mise en oeuvre d'un tel système. Les conduites concernées sont destinées au transport de liquide ou de gaz et on considère notamment les conduites forcées.

Les installations hydroélectriques à retenues d'eau surélevées mettent en oeuvre des conduites forcées de grand diamètre permettant d'utiliser l'énergie potentielle de l'eau due à la différence de hauteur entre la retenue amont et des turbines aval, en contrebas, actionnées par l'eau. Ces conduites forcées sont généralement constituées de tubes métalliques assemblés le long d'une pente et qui sont protégés par des revêtements extérieurs et intérieurs. Il est nécessaire d'entretenir régulièrement ces conduites forcées et notamment de renouveler la protection intérieure en éliminant le revêtement intérieur existant ainsi que les éventuelles oxydations et en le remplaçant par un nouveau. En général l'entretien consiste à réaliser une préparation de surface en adéquation avec l'application d'un nouveau revêtement. Cette préparation peut par exemple consister en un décapage avec une projection d'abrasif permettant de créer une certaine rugosité de surface pour l'accroche et l'application d'un nouveau revêtement.

Ces opérations sont actuellement effectuées manuellement et sont particulièrement pénibles, voir dangereuses. En particulier, les opérateurs travaillent dans un milieu clos et les revêtements qu'ils doivent enlever peuvent contenir des substances toxiques comme par exemple de l'amiante ou des métaux lourds. Il peut en être de même pour les revêtements qui viennent en remplacement, par exemple à cause des solvants utilisés.

De plus, ce travail doit être relativement précis car les outils utilisés, par exemple pour le décapage les lances à eau sous ultra haute pression (UHP - environ 3000 bars) ou les « sableuses » (utilisé ici comme terme générique couvrant l'utilisation de particules abrasives en général), ont une zone d'action relativement limitée et l'attention de l'opérateur doit être soutenue. Il en résulte que ces opérations peuvent prendre un temps considérable à la fois pour le travail et les vérifications pour peu que la conduite forcée soit un peu longue. Certaines de ces conduites peuvent mesurer plusieurs kilomètres.

Il est donc souhaitable de pouvoir automatiser cet entretien et de mettre en oeuvre une machine qui puisse effectuer de tels travaux. Toutefois, de nombreuses contraintes sont présentes. Les conduites peuvent avoir des diamètres différents selon les cas, par exemple entre 1,5 m et 2,5m. L'inclinaison de la conduite peut varier en fonction des variations de la pente du terrain et la conduite peut même être horizontale. Les raccords entre les tubes peuvent être de divers types et on peut trouver un assemblage par rivets, rivets qui forment des irrégularités sur la paroi intérieure de la conduite. L'environnement de travail est très difficile (eau, abrasifs, solvants...). Dans ces conditions, la fabrication d'une machine performante, fiable et polyvalente nécessite de surmonter de nombreux obstacles et la réalisation de fonctionnalités adaptées à ces buts.

On connaît par le document EP 1 245 692 un dispositif fixe et rigide d'intervention dans une conduite et par les documents FR 2 638 813 et EP 0 378 840 des dispositifs d'inspection de conduites.

La présente invention propose donc un système d'entretien de la paroi intérieure d'une conduite, le système comportant un chariot porte-outils et un ensemble de câbles étendus entre ledit chariot et des treuils d'extrémités amont et aval de ladite conduite, lesdits câbles permettant des déplacements du chariot dans ladite conduite.

Selon l'invention, ledit chariot comporte un support avant à son extrémité avant, un support arrière à son extrémité arrière et une poutre allongée étendue entre les supports avant et arrière, un noyau comportant des bras radiaux portant des outils d'entretien étant placé sur la poutre, le noyau pouvant se déplacer en translation le long de la poutre grâce à un moyen de déplacement de noyau, les supports avant et arrière comportant des pieds avec des moyens de roulement, ledit noyau comportant en outre des moyens permettant sa rotation autour de la poutre afin que les outils puissent balayer radialement la paroi interne sur sa circonférence, l'action des câbles permettant un positionnement grossier des outils par positionnement du chariot le long de la conduite et le déplacement du noyau le long de la poutre permettant un positionnement précis des outils le long de la paroi.

Dans divers modes de mise en oeuvre de l'invention, les moyens suivants pouvant être utilisés seuls ou selon toutes les combinaisons techniquement possibles, sont employés :
- la conduite est une conduite pour un liquide ou un gaz,
- la conduite est une conduite forcée,
- le moyen de déplacement de noyau comporte une vis sans fin actionnée par un moteur,
- le moteur actionnant le moyen de déplacement de noyau est choisi parmi les moteurs électrique, hydraulique, pneumatique ou autre,
- le moteur électrique actionnant le moyen de déplacement de noyau est du type sans balais,
- le moyen de déplacement de noyau comporte en outre des moyens de détection, directe ou indirecte _par calcul fonction du nombre de tours moteur par exemple_, de position du noyau,
- les outils sont du type laser,
- les outils sont du type pulvérisateur de revêtement de protection de paroi, notamment pulvérisation de peinture,
- les outils sont du type lances de projection d'eau à ultra haute pression,
- les outils sont du type lances de projection d'abrasif,
- les outils sont du type à mouvement propre de rotation ou de martellement et actionnés par un moteur électrique ou hydraulique ou pneumatique propre,
- les outils sont du type à friction comme des balais, des brosses, ponceuses,
- les outils sont du type à choc comme les marteaux piqueurs, burineuses...
- les outils sont alimentés par un fluide provenant d'une source externe audit système,
- le fluide est amené par des conduites souples, type flexibles, directement aux outils,
- le fluide est amené aux outils par au moins un répartiteur à joint tournant monté sur le noyau,
- les outils sont alimentés par de l'électricité provenant d'une source externe audit système,
- l'électricité est amenée par un des conducteurs souples directement aux outils,
- l'électricité est amenée aux outils par au moins un répartiteur à contacts tournants monté sur le noyau,
- la poutre est rigide et est reliée aux supports avant et arrière par l'intermédiaire d'une liaison à cardan avant et d'une liaison à cardan arrière,
- la position de la poutre par rapport aux supports avant et arrière est réglable au moins en hauteur, un vérin avant étant disposé dans le support avant et un vérin arrière étant disposé dans le support arrière, la partie mobile réglable du vérin étant reliée à la poutre,
- les vérins avant et arrière sont du type à vis sans fin,
- le vérin comporte en outre une barre de guidage,
- la vis sans fin de chacun des vérins avant et arrière est actionnée par un moteur,
- le moteur actionnant la vis sans fin de chacun des vérins avant et arrière est choisi parmi les moteurs électrique, hydraulique, pneumatique ou autre,
- le moteur électrique actionnant la vis sans fin de chacun des vérins avant et arrière est du type sans balais,
- les vérins avant et arrière comportent en outre des moyens de détection, directe ou indirecte _par calcul fonction du nombre de tours moteur par exemple_, de position d'extrémité de poutre,
- les vérins avant et arrière sont du type à piston, hydraulique ou pneumatique,
- la poutre est fixée à la partie mobile réglable du vérin,
- la poutre est posée sur la partie mobile réglable du vérin,
- les supports avant et arrière peuvent tourner autour du grand axe de la poutre,
- la liaison entre l'extrémité de poutre et la partie mobile réglable du vérin comporte un palier de rotation,
- les supports avant et arrière peuvent s'éloigner ou se rapprocher entre eux,
- la liaison entre l'extrémité de poutre et la partie mobile réglable du vérin comporte un palier de translation,
- chaque support comporte trois pieds radiaux ayant chacun au moins une roulette à son extrémité, lesdits pieds étant disposés equiangulairement autour dudit support, soit à 120° l'un de l'autre,
- chaque support comporte quatre pieds radiaux ayant chacun au moins une roulette à son extrémité, lesdits pieds étant disposés equiangulairement autour dudit support, soit à 90°l'un de l'autre,
- chaque support comporte trois paires de pieds radiaux, chaque pied ayant au moins une roulette à son extrémité, chaque paire de pied étant alignée dans la longueur du chariot et étant de préférence en débordement avant et arrière dudit support, lesdites paires de pieds étant disposées equiangulairement autour dudit support, soit à 120° l'une de l'autre,
- chaque support comporte quatre paires de pieds radiaux, chaque pied ayant au moins une roulette à son extrémité, chaque paire de pied étant alignée dans la longueur du chariot et étant de préférence en débordement avant et arrière dudit support, lesdites paires de pieds étant disposées equiangulairement autour dudit support, soit à 90° l'une de l'autre,
- chaque support comporte quatre pieds ayant chacun au moins une roulette à son extrémité, lesdites roulettes étant disposées aux quatre coins d'un quadrilatère se trouvant coté inférieur du support et débordant au moins latéralement dudit support,
- la longueur et/ou hauteur des pieds est réglable,
- les roulettes sont réglables, du type jockey,
- les roulettes sont du type trolley, encore dite folle,
- chaque pied comporte une roulette,
- chaque pied comporte trois roulettes,
- les trois roulettes d'un pied sont solidairement folles, les trois tournant ensemble en synchronisme,
- les trois roulettes d'un pied sont parallèles entre elles et dans des plans latéraux distincts entre eux, avec une roulette centrale et deux roulettes latérales,
- la roulette centrale a un diamètre supérieur au diamètre identique des deux roulettes latérales,
- la roulette centrale a un diamètre inférieur au diamètre identique des deux roulettes latérales,
- la roulette centrale est décalée verticalement par rapport aux deux roulettes latérales, les trois roulettes ayant le même diamètre,
- la roulette centrale est décalée verticalement vers le bas par rapport aux deux roulettes latérales, les trois roulettes ayant le même diamètre,
- la roulette centrale est décalée verticalement vers le haut par rapport aux deux roulettes latérales, les trois roulettes ayant le même diamètre,
- la roulette centrale est décalée vers l'avant par rapport aux deux roulettes latérales,
- la roulette centrale est décalée vers l'arrière par rapport aux deux roulettes latérales,
- les roulettes sont montées sur les pieds par l'intermédiaire d'amortisseurs,
- le quadrilatère ayant à ses quatre coins des roulettes déborde en outre vers l'avant du support avant,
- le quadrilatère ayant à ses quatre coins des roulettes déborde en outre vers l'arrière du support avant,
- le quadrilatère ayant à ses quatre coins des roulettes déborde en outre vers l'avant du support arrière,
- le quadrilatère ayant à ses quatre coins des roulettes déborde en outre vers l'arrière du support arrière,
- de préférence, le quadrilatère ayant à ses quatre coins des roulettes déborde en outre vers l'arrière et l'avant du support,
- la longueur des bras est réglable afin de pouvoir régler la distance des outils par rapport à la paroi intérieure de la conduite,
- la position radiale des outils par rapport au noyau est réglable afin de pouvoir régler la distance des outils par rapport à la paroi intérieure de la conduite,
- le support arrière comporte un boîtier de contrôle du fonctionnement dudit système,
- le boîtier de contrôle comporte une télécommande.
- la télécommande est filaire,
- la télécommande est radioélectrique,
- la télécommande est par infrarouge,
- les treuils sont motorisés,
- la motorisation est électrique,
- les treuils comportent en outre un moyen d'actionnement mécanique manuel, en enroulement et/ou déroulement,
- le treuil de traction est motorisé,
- le treuil de tension est motorisé,
- le treuil de secours est motorisé,
- en équivalence, le treuil de traction est monté sur le support arrière,
- en équivalence, le treuil de tension est monté sur le support avant,
- en équivalence, le treuil de secours est monté sur le support arrière,
- le support arrière est relié par un câble de traction à un treuil de traction amont et par un câble de secours à un treuil de secours amont, et en ce que le support avant est relié par un câble de tension à un treuil de tension aval, ledit treuil de tension aval assurant une tension sensiblement constante audit câble de tension,
- les moyens permettant la rotation dudit noyau autour de la poutre permettent des mouvements de rotation en va et vient d'une amplitude angulaire déterminée,
- les moyens permettant la rotation dudit noyau autour de la poutre permettent des mouvements de rotation sur plus de 360°,
- le noyau comporte un bras radial,
- le noyau comporte deux bras radiaux,
- le noyau comporte trois bras radiaux,
- le noyau comporte quatre bras radiaux,
- le noyau comporte un nombre N de bras radiaux, N étant supérieur ou égal à un, et que les moyens permettant la rotation dudit noyau autour de la poutre permettent des mouvements de rotation en va et vient d'une amplitude angulaire d'environ 360°/N, de préférence, N étant égal à 3 et l'amplitude angulaire de la rotation en va et vient étant alors d'environ 120°,
- les outils sont soit des lances de projection d'eau à ultra haute pression, soit des lances de projection d'abrasif,
- le chariot porte-outils comporte des moyens d'éclairage.

L'invention concerne également un procédé de fonctionnement d'un système d'entretien de la paroi intérieure d'une conduite. D'une manière générale, une zone de longueur de la conduite est entretenue par des outils alors que le chariot porte outils est immobilisé dans ladite zone, le noyau à bras porte outils se déplaçant au sein dudit chariot immobilisé.

Plus particulièrement, il s'agit d'un procédé de fonctionnement d'un système d'entretien de la paroi intérieure d'une conduite, ledit système comportant un chariot porte outil et un ensemble de câbles étendus entre ledit chariot et des treuils d'extrémités amont et aval de ladite conduite, lesdits câbles permettant des déplacements du chariot dans ladite conduite, dans lequel on met en oeuvre un chariot comportant un support avant à son extrémité avant, un support arrière à son extrémité arrière et une poutre allongée étendue entre les supports avant et arrière, un noyau comportant des bras radiaux portant des outils d'entretien étant placé sur la poutre, le noyau pouvant se déplacer le long de la poutre grâce à un moyen de déplacement de noyau, les supports avant et arrière comportant des pieds avec des moyens de roulement, ledit noyau comportant en outre des moyens permettant sa rotation autour de la poutre afin que les outils puissent balayer la paroi interne sur sa circonférence, et on agit sur les câbles pour assurer un positionnement grossier des outils par positionnement du chariot le long de la conduite et on assure un positionnement précis des outils le long de la paroi par déplacement du noyau le long de la poutre.

La présente invention, sans qu'elle en soit pour autant limitée, va maintenant être exemplifiée avec la description qui suit de modes de réalisation et de mise en oeuvre en relation avec :
la Figure 1 qui représente schématiquement le système de l'invention avec un chariot porte-outils installé dans une conduite forcée et relié à des treuils amont et aval,
la Figure 2 qui représente un chariot porte-outils en vue perspective par l'arrière (amont),
la Figure 3 qui représente en perspective une poutre avec un noyau comportant des bras porte-outils radiaux,
la Figure 4 qui représente en perspective un détail du noyau sur sa poutre,
la Figure 5 qui représente un support avant (coté aval) en vue perspective par l'arrière,
la Figure 6 qui représente un support arrière (coté amont) en vue perspective par l'arrière,
la Figure 7 qui représente en perspective une structure de vérin de réglage de hauteur de la poutre,
la Figure 8 qui représente schématiquement le passage du chariot porte-outils dans un coude de la conduite après ajustement de la hauteur de la poutre par rapport à chacun des supports avant et arrière grâce aux vérins de réglage de hauteur, et

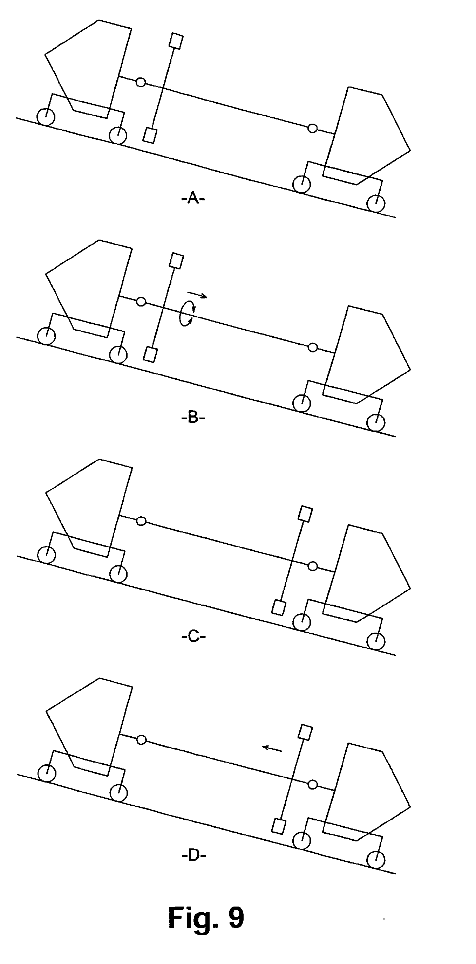

la Figure 9 qui représente schématiquement les étapes de fonctionnement de -A- à -D-d'un chariot porte-outils avec en -A- le noyau à bras porte-outils ayant été ramené à sa position de départ à une extrémité de la poutre suite à une initialisation, en -B- le cycle de travail ayant été commencé ce qui provoque la translation et rotation du noyau à bras porte-outils vers l'autre extrémité, d'arrivée, de la poutre, en -C- le noyau à bras porte-outils ayant atteint l'extrémité d'arrivée de la poutre et la translation et rotation dudit noyau s'étant arrêtés, et en -D- le retour du noyau à bras porte-outils vers sa position de départ.

A titre d'exemple d'application on va considérer un entretien de conduite forcée consistant en un décapage à l'eau sous ultra haute pression puis une projection d'abrasif. Cet exemple est non limitatif notamment pour ce qui concerne le type de conduite et le type de traitement effectué sur la conduite. A cette fin, le chariot porte-outils du système de l'invention effectue deux passages successifs, avec changement des outils entre les deux passages. Le décapage par projection d'eau à ultra haute pression permet de retirer la peinture ainsi que ses composants nocifs. L'eau qui descend le long de la conduite est ensuite récupérée en aval et filtrée pour la dépolluer. Le chariot porte-outils placé à l'intérieur de la conduite est relié coté amont par un câble de traction à un treuil de traction amont et par un câble de secours à un treuil de secours amont. Le chariot porte-outils est relié coté aval par un câble de tension à un treuil de tension aval. Le câble de secours est une sécurité destinée à retenir le chariot porte-outils au cas où le câble de traction ou le treuil de traction viendraient à lâcher. Le câble de secours n'est donc pas soumis à un effort particulièrement important en temps normal. Le câble de tension et le treuil aval, en particulier ce dernier, comportent des moyens assurant une force de tension sensiblement constante au dit câble de tension qui tend à tirer vers l'aval et le bas le chariot porte-outils. Cette tension tendant à tirer vers le bas le chariot porte-outils est contrée par le câble de traction et son treuil de traction lorsque le chariot porte-outils est immobile. Ainsi, pour déplacer vers le bas le chariot porte-outils, il suffit de relâcher le treuil de traction et le chariot porte-outils va donc descendre le long de la conduite sous l'effet de son propre poids et de la tension du câble de tension. Pour faire remonter le chariot porte-outils, il suffit que la force de traction vers le haut soit supérieure à la force de tension vers le bas, ce qui peut être obtenu en augmentant la force de traction vers le haut par le câble de traction et son treuil de traction et/ou en diminuant la force de tension vers le bas par le câble de tension et son treuil de tension.

On comprend que dans une version moins évoluée, le câble de tension et son treuil de tension peuvent être omis, le chariot porte-outils pouvant aussi descendre du fait de son propre poids. Toutefois, dans le cas de conduites avec rivets ou autre obstacle, le câble de tension et son treuil de tension sont une aide pour le passage de tels obstacles à la descente.

On comprend que d'une manière équivalente, le treuil de traction et le treuil de tension puissent être sur le chariot porte-outils et les extrémités amont et aval des câbles de traction et de tension étant simplement fixées à ces extrémités respectives de la conduite. Dans ce cas, on réfère conserver le treuil de secours coté extrémité amont de la conduite pour en avoir un contrôle direct plus aisé au cas de défaillance générale des moyens moteurs et/ou de contrôle du système.

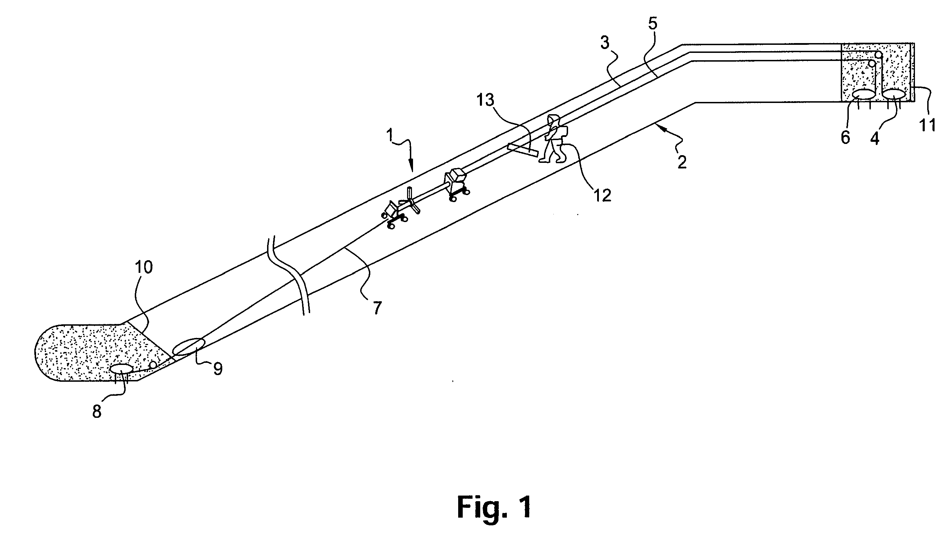

Sur la Figure 1, le chariot porte outils 1 a été installé dans une conduite forcée 2 et descendu le long de la conduite jusqu'à sa position de travail. Le chariot porte outils 1 est relié, d'une part, par le câble de traction 5 au treuil de traction amont 6 et par le câble de secours 3 au treuil de secours 4 amont et, d'autre part, par le câble de tension 7 au treuil de tension aval 8. Un opérateur 12 suit le chariot porte outils et le commande à distance grâce à la télécommande 13. On a aussi représenté à titre d'exemple sur la Figure 1, des moyens d'accès ou de décharge (trou d'homme 9) à/de la conduite forcée, ainsi que des moyens d'obturation amont 11 et aval 10 de ladite conduite. Par contre, les moyens de fourniture d'énergie et de fluide à type de source électrique, compresseur, pompes, flexibles, câbles électriques... n'ont pas été représentés pour des raisons de simplification.

Le chariot porte-outils du système peut être qualifié de robot car la plus grande partie de son fonctionnement est automatisé grâce à des moyens de contrôle disposés dans un boîtier de contrôle.

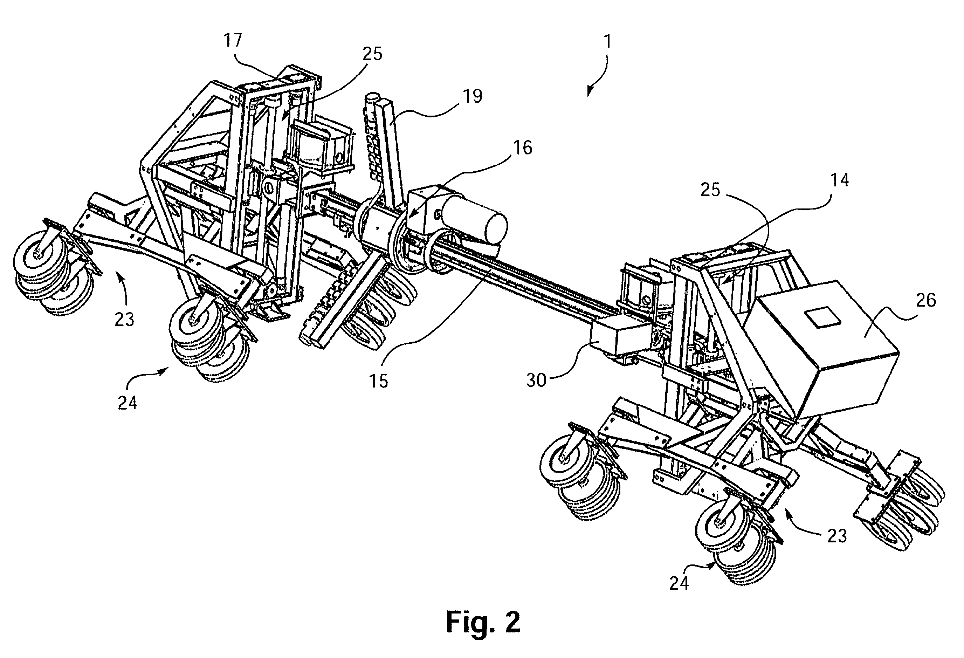

Comme représenté Figure 2, le chariot porte-outils 1 est constitué d'une poutre 15 centrale rigide allongée portée à ses deux extrémités par deux supports, un support avant 17 coté aval et un support arrière 14 coté amont. Le support arrière 14 comporte un boîtier de contrôle et de commande 26. Les deux supports peuvent pivoter autour du grand axe de la poutre. La poutre 15 est reliée à chacun des supports avant et arrière par l'intermédiaire d'une liaison à cardan démontable 32 afin de permettre la séparation de la poutre d'avec le support avant et le support arrière pour notamment le transport ou l'installation dans une conduite, par exemple par passage par un trou d'homme ou équivalent. Un noyau 16 à bras 19 porte outils est monté sur la poutre 15 et peut s'y déplacer en translation et aussi avec rotation des bras 19 autour de la poutre.

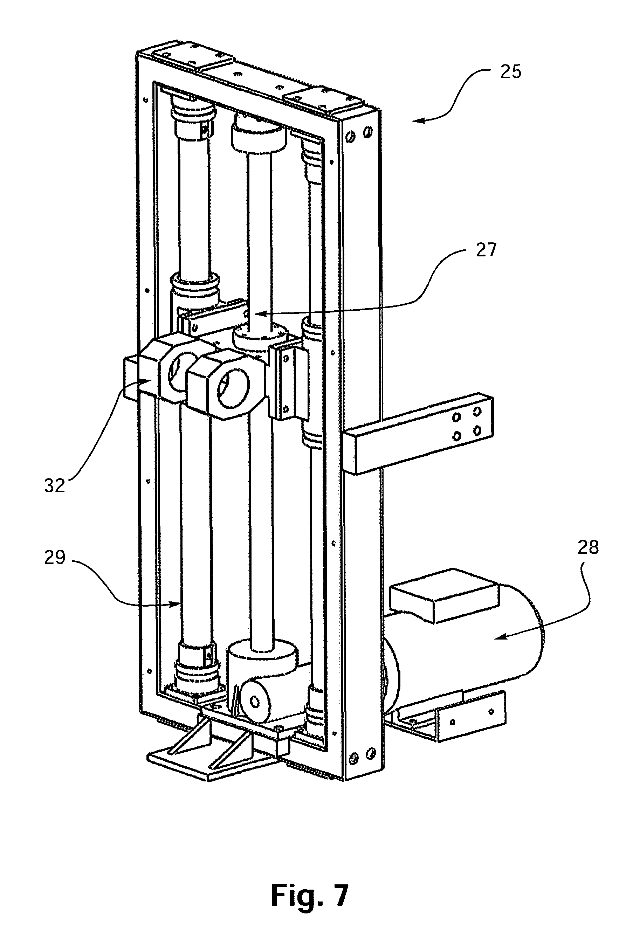

De plus, en amont du cardan pour le support arrière et en aval du cardan pour le support avant, les extrémités de la poutre sont placées sur des pièces mobiles de vérins, respectivement structure de vérin avant disposée dans le support avant et structure de vérin arrière disposée dans le support arrière, afin de permettre un réglable en hauteur de la position de la poutre par rapport aux supports avant et arrière. Cette structure de vérin 25 est représentée en détail sur la Figure 7. Le vérin 25 est basé sur un système vis sans fin 27 et écrou. Il est ici actionné par un moteur électrique 28. Afin de stabiliser l'ensemble, une barre de guidage 29 parallèle à la vis sans fin 27 est mise en oeuvre.

De préférence, la liaison entre l'extrémité de poutre et la pièce mobile du vérin comporte un/des paliers permettant à la fois des mouvements de rotation du support autour de l'axe de la poutre et de translation du support le long de l'axe de la poutre selon un certain jeu. En fonctionnement du système, l'axe principal de la poutre se trouve le long de l'axe central de la conduite qui est cylindrique.

Figure 2, chacun des supports comporte quatre pieds 23 terminés chacun par des roulettes 24 du type trolley, encore dite folle, qui sont libres de s'orienter. Chaque pied comporte trois roulettes fonctionnellement solidaires en ce sens qu'elles tournent/s'orientent toutes les trois ensembles en synchronisme et elles restent donc parallèles entre elles. Ces trois roulettes 24 d'un pied 23 sont dans des plans latéraux distincts avec une roulette centrale et deux roulettes latérales. Suivant le mode de réalisation, une des trois roulettes d'un pied présente un diamètre inférieur au diamètre des deux autres ou, inversement, une des trois roulettes d'un pied présente un diamètre supérieur au diamètres des deux autres. En alternative des diamètres différents des roulettes, un décalage vertical de l'axe de rotation de la roulette peut être mis en oeuvre pour obtenir le même résultat comme bien visible Figure 2 pour le support avant 17 pour les roulettes des deux pieds coté observateur où les roulettes centrales ont été décalées vers le bas. Cette dernière solution permet d'utiliser des roulettes de diamètre identique pour touts les pieds. La mise en oeuvre de plusieurs roulettes par pied, notamment trois roulettes comme représenté, permet un passage plus aisé des obstacles présents dans la conduite comme sont exemple les rivets, les raccords de conduite. Dans des modes de réalisation moins évolués, une seule roulette est mise en oeuvre par pied.

Les roulettes sont aux quatre coins d'un quadrilatère (virtuel) de sustentation situé sous chaque support, le quadrilatère débordant de la projection vers le bas du support afin d'avoir une meilleure stabilité de chaque support. A cette fin, les pieds qui sont vers le bas des supports ont des directions inclinées vers l'extérieur et débordent à l'avant et l'arrière des supports afin d'élargir le quadrilatère de sustentation. Dans une modalité particulière de réalisation, les pieds sont réglables en longueur par exemple par mise en oeuvre d'au moins une roulette de type jockey.

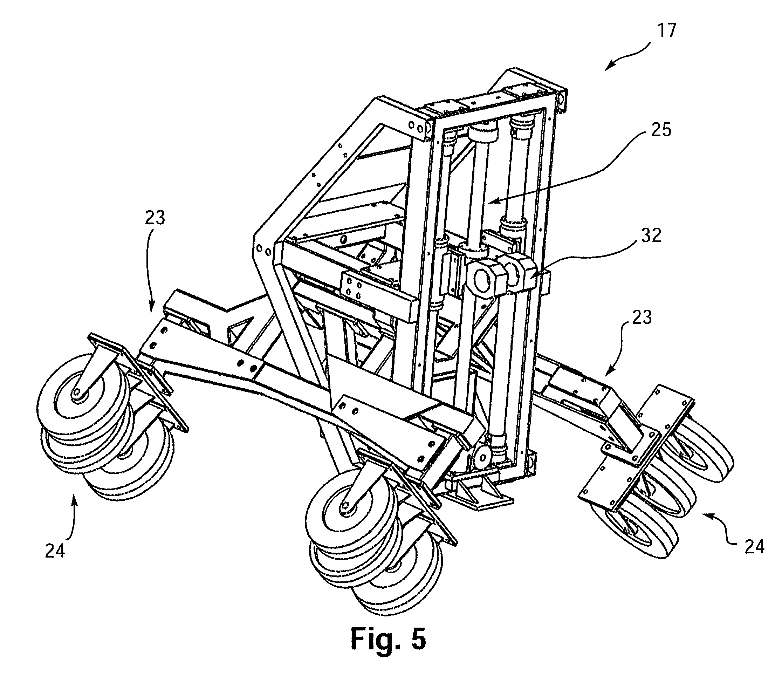

La Figure 5 permet de voir plus en détail le support avant 17 qui est vu par l'arrière, la poutre ayant été démontée au niveau du cardan 32. On peut remarquer la disposition des pieds 23 et des roulettes 24 qui permet un élargissement de l'empâtement et une meilleure stabilité dans la conduite.

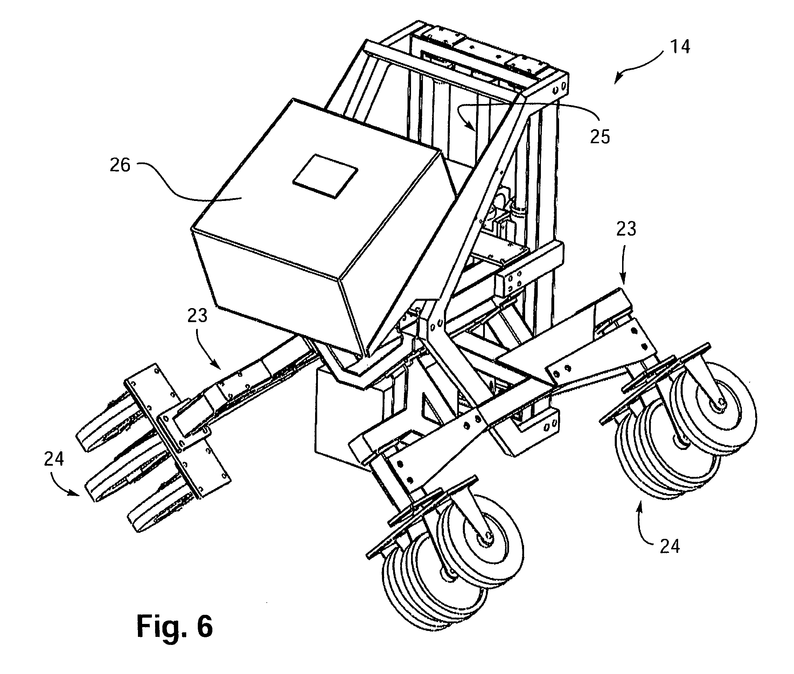

La Figure 6 permet de voir plus en détail le support arrière 14 qui est vu par l'arrière, la poutre ayant été démontée au niveau du cardan. Ici encore, on peut remarquer la disposition des pieds 23 et des roulettes 24 qui permet un élargissement de l'empâtement et une meilleure stabilité dans la conduite. Globalement les structures générales des supports avant et arrière sont identiques. Le support arrière 14 comporte un boîtier de contrôle 26 qui permet de gérer le fonctionnement du système et en particulier du chariot porte outils. Le boîtier de contrôle 26 comporte des commandes propres permettant à un opérateur d'agir sur le fonctionnement du système. Une télécommande filaire reliée au boîtier de contrôle 26 permet également une commande à distance comme on l'a vu.

Les pieds 23 permettent d'augmenter l'empattement et aussi de régler la position des roulettes pour que le centre du chariot (endroit où arrive l'extrémité de la poutre) soit sensiblement positionné au centre de la conduite à traiter, quel que soit le diamètre de celle-ci. On rappelle que le vérin portant l'extrémité de la poutre permet aussi un tel réglage de centrage de la poutre.

Grâce aux vérins, aux cardans et aux paliers de rotation et translation, le chariot porte outil peut se déformer dans le cas d'un passage de coude comme représenté

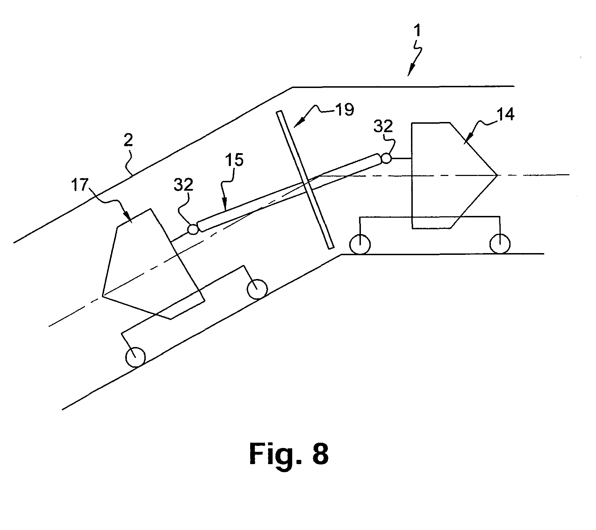

Figure 8 où l'extrémité arrière/amont de la poutre a été remontée tout comme l'extrémité avant/aval de la poutre. par rapport au centre respectif de la conduite.

On remarque que dans cet exemple de réalisation les vérins agissent selon la verticale et donc que le chariot porte outil est plus particulièrement adapté à un passage de coude qui se trouve dans le plan vertical, ce qui est généralement le cas pour les conduites forcées qui sont pour la plupart dans un plan vertical. Dans d'autres modalités de réalisation on prévoit un vérin à déplacement horizontal en plus de celui à déplacement vertical afin de permettre tout type de décalage de la poutre par rapport aux supports. Pour en revenir à l'exemple représenté sur les Figures, les notions d'horizontal et vertical font référence à la position de fonctionnement des supports donnée par la structure de leurs moyens de roulement : le quadrilatère de sustentation formé par les roulettes des quatre pieds reposant sur la paroi intérieure de la conduite est horizontal afin d'avoir la stabilité la meilleure en fonctionnement.

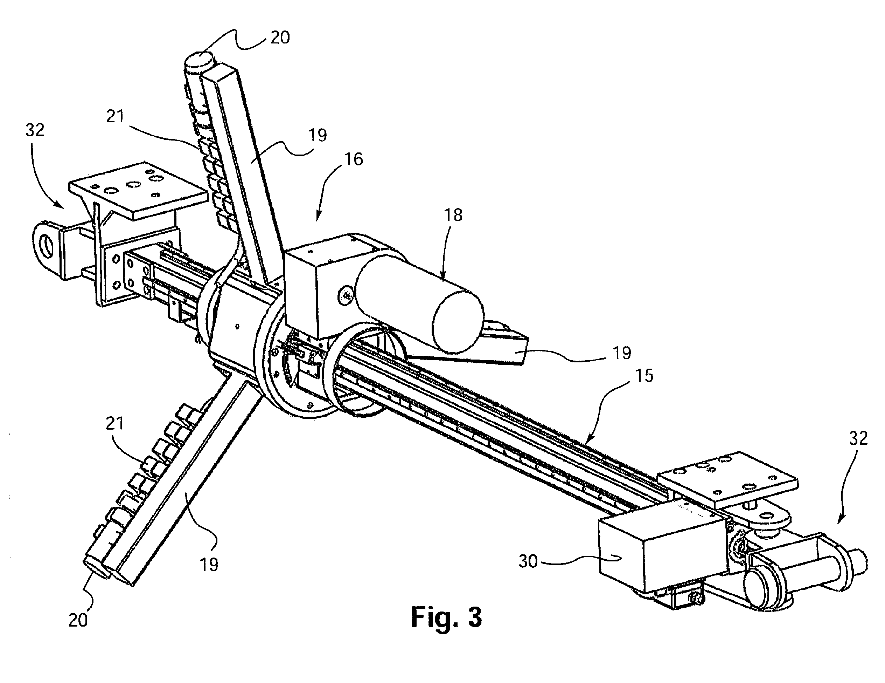

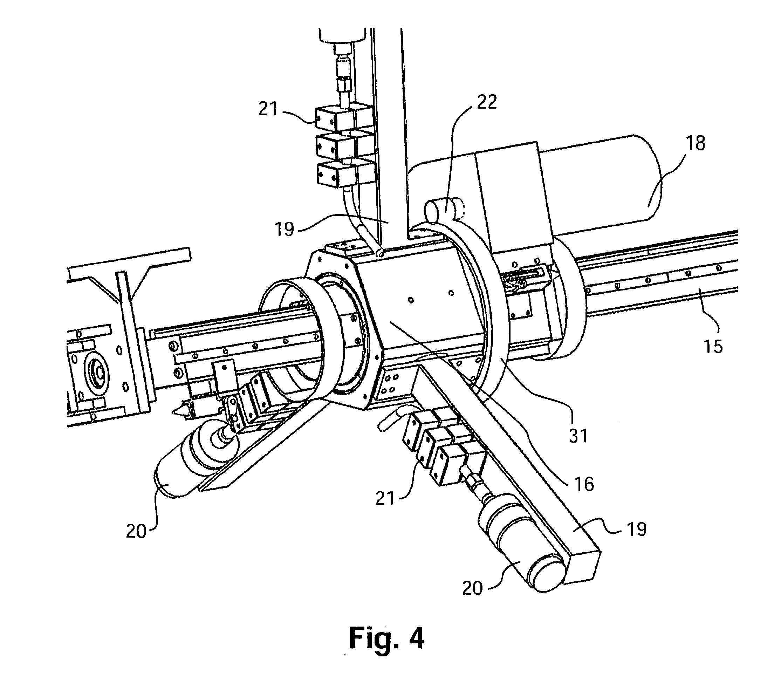

Figure 3 et Figure 4, un noyau 16 comportant des bras 19 porte-outils radiaux est donc disposé sur la poutre. Les bras 19 radiaux, situés dans un même plan sensiblement perpendiculaire à l'axe principal de la poutre, au nombre de trois dans l'exemple représenté, portent des outils, par exemple buse de projection d'abrasif ou de projection d'eau à ultra haute pression dans le cas d'un décapage de la paroi intérieure de la conduite. Dans l'exemple représenté la position des outils le long des bras est réglable mais on peut prévoir en plus ou alternative que la longueur des bras soit réglable. De préférence, on met des moyens de fixation 21 des outils 20 qui permettent le déplacement et/ou le changement des outils par exemple pour passer d'un décapage à la peinture. L'énergie ou les fluides nécessaires aux outils sont fournis par des flexibles provenant de sources d'énergie ou de fluide ici externe au chariot porte-outils, en pratique à l'extérieur de la conduite.

Le noyau 16 peut se déplacer en translation le long de la poutre et faire des allers et retours entre le support avant et le support arrière. Le déplacement en translation du noyau est obtenu par mise en oeuvre d'une vis sans fin motorisée ici par un moteur électrique 30 et par des moyens permettant de connaître la position dudit noyau le long de la poutre. Par exemple, on met en oeuvre un capteur de fin de course à chaque extrémité de la poutre qui détecte l'arrivée du chariot ainsi qu'un moteur à capteur de position/rotation, par exemple moteur sans balai à commande électronique, pour calculer la position du noyau le long de la poutre dans des moyens de contrôle du système.

En outre, le noyau peut tourner en rotation autour de l'axe principal de la poutre grâce à un moteur ici électrique 18 dont le pignon 22 actionne une couronne dentée 31 sur le noyau qui est donc en deux parties fonctionnelles : translation et rotation. Cette rotation est oscillatoire dans l'exemple représenté étant donné l'absence de joint tournant pour fourniture de fluide (ou énergie selon le cas) aux outils disposés sur les bras, les flexibles étant directement reliés aux outils disposés sur les bras et suivant les déplacements des ces bras. Pour trois bras porte-outils, l'amplitude d'oscillation est d'environ 360°/3 soit environ 120°. Dans des variantes avec mise en oeuvre d'un joint tournant, le flexible d'amenée du fluide (ou électrique avec contact tournant au lieu de joint tournant) ne suivant plus la rotation des bras, le système peut être mis en oeuvre avec rotation à plus de 360° du noyau et donc des bras autour de la poutre. Les bras porte-outils ont tous la même longueur et les outils sont fixés le long de leurs bras respectifs dans la même position relative et il en résulte que lorsque la poutre est le long de l'axe central de la conduite, les outils se déplacent en rotation et translation à une distance sensiblement constante de la paroi intérieure de ladite conduite.

En pratique, le noyau est donc constitué des deux parties fonctionnelles, une partie qui se déplace en translation le long de la poutre et une partie qui peut tourner autour de la partie en translation. De préférence les moteurs électriques utilisés dans le chariot porte outils (vérin, translation et rotation de noyau) sont du type sans balai (« brushless »).

Le chariot porte-outils est déplacé dans la conduite par treuillage, ce qui permet un positionnement grossier des outils. Une fois le chariot porte-outils à la position voulue, le déplacement du noyau avec ses bras portant des outils permet un positionnement précis des outils le long de ladite paroi.

Le principe de fonctionnement du système robotisé est décrit ci-après. Le robot se déplace dans la conduite à l'aide des treuils et en particulier le treuil de traction amont qui est dévidé/déroulé pour faire descendre vers l'aval le chariot porte-outils. Le treuil de tension aval est autonome et exerce une force de traction vers le bas sensiblement constante de 6500 N sur le chariot porte-outils. La commande du treuil de traction, selon les modalités de réalisation et de mise en oeuvre, peut s'effectuer en amont au pied dudit treuil ou à distance par télécommande ou à partir du boîtier de contrôle du fonctionnement du système disposé sur le support arrière du chariot porte-outils, directement ou par sa télécommande filaire. Dans l'exemple représenté, la commande du treuil de traction se fait directement au pied dudit treuil par un opérateur amont relié par des moyens radio à l'opérateur local qui suit le chariot porte-outils dans la conduite. Le câble de secours du treuil de secours amont est une sécurité empêchant la descente accidentelle du chariot porte-outils au cas où, par exemple, le câble de traction céderait. Une fois la zone à décaper atteinte, le chariot porte-outils est immobilisé par arrêt et blocage du treuil de traction. L'opérateur local, situé dans la conduite et à environ 10 mètre en arrière/amont du chariot porte-outils, le commande grâce à la télécommande filaire reliée au boîtier de contrôle du fonctionnement du système disposé sur le support arrière. Il est également possible de commander le système directement à partir du boîtier de contrôle.

Lorsque le robot est arrivé et stoppé dans sa zone de d'activité, l'opérateur local appuie sur un bouton d'initialisation et le noyau revient, s'il ne l'était pas, à une extrémité, de départ, de la poutre amenant ainsi les bras et leurs outils dans leur position de départ, -A- Figure 9. Pour commencer le décapage, on démarre le groupe permettant d'alimenter les outils du robot en fluide ad-hoc, soit eau à ultra haute pression, soit fluide de projection d'abrasif selon le type d'outil mis en oeuvre. Ce démarrage est généralement effectué par l'opérateur amont relié par radio à l'opérateur local car le groupe est en général en dehors de la conduite. Une canalisation de fluide relie le groupe au chariot porte-outils. Une fois les outils en action, car il y a un temps d'attente entre le démarrage du groupe/l'envoi du fluide dans la canalisation et l'activation effective des outils due à la distance entre le chariot porte-outils et le groupe générant la pression, l'opérateur local démarre un cycle de travail en appuyant sur le bouton correspondant de sa télécommande. Ce cycle de travail consiste à mettre en rotation oscillatoire le noyau et translater ce dernier le long de la poutre jusqu'à l'autre extrémité, d'arrivée, de la poutre, -B- Figure 9. On comprend que la rotation s'effectue plus rapidement que la translation afin que toute la surface intérieure de la conduite soit traitée. La translation du noyau le long de la poutre peut être continue ou discontinue, dans ce dernier cas, la translation n'a lieu que vers la fin ou à la fin de chaque oscillation du noyau.

Une fois les outils arrivés à l'autre extrémité, d'arrivée, -C- Figure 9, le cycle de travail s'arrête, la rotation et l'avancement des outils s'arrêtant. A partir de là, pour préparer le robot à un nouveau cycle de travail, l'opérateur local doit refaire une initialisation en appuyant sur bouton d'initialisation de sa télécommande afin de ramener, -D- Figure 9, les outils à l'extrémité de départ de la poutre. Il est aussi nécessaire de déplacer le chariot porte-outils pour l'amener dans la zone suivante à traiter, ce déplacement pouvant se faire avant ou après la réinitialisation. Si le positionnement du chariot porte-outils se fait visuellement par l'opérateur local, la réinitialisation est de préférence effectuée après le déplacement afin de pouvoir voir où le prochain cycle de travail va s'arrêter et amener les outils restés en fin de course en limite de la zone traitée précédemment. Si le déplacement est effectué par déroulement contrôlé d'une longueur de câble de traction correspondant sensiblement à l'amplitude de déplacement du noyau le long de la poutre, le moment de la réinitialisation, avant ou après le déplacement, a moins d'importance. Les initialisations, cycles de travail et déplacements du chariot porte-outils sont ainsi répétés pour pouvoir traiter la longueur de la conduite. Du fait que le cycle de travail est automatisé et que la rotation et la translation du noyau et donc des outils sont contrôlées par des moyens électroniques/informatiques du boîtier de contrôle, une grande précision de balayage de la paroi intérieure est obtenue.

On comprend que cet exemple de fonctionnement est indicatif est que dans des variantes l'automatisation peut être plus ou moins poussée. Par exemple, le cycle de travail peut comporter à son début une initialisation automatique au cas où le noyau de se trouverait pas à son extrémité de départ le long de la poutre. Un cycle de travail peut être arrêté volontairement et repris au même endroit ou à un autre. Une translation volontaire (avec ou sans rotation associée) rapide peut être effectuée par l'opérateur local... A ces fins, le boîtier de contrôle comporte un affichage et des moyens d'entrée de commandes, par exemple à type de boutons, clavier et/ou manette. La télécommande filaire, quant à elle, est de préférence simplifiée avec quelques boutons dont d'arrêt d'urgence, d'initialisation et de démarrage de cycle de travail par exemple.

Le système et en particulier le chariot porte-outils est dans un environnement de travail assez agressif et on met en oeuvre des moyens de protection des éléments sensibles le constituant. En particulier on protège les équipements électriques et mécaniques (notamment coussinets, paliers, roulements, articulations...). Par exemple, des soufflets sont utilisés autour de la poutre, de chaque coté du noyau pour assurer une certaine étanchéité. Par exemple, des tôles déflectrices ont été ajoutées pour protéger les pièces sensibles du chariot porte-outils. Le vérin de réglage en hauteur de la poutre est aussi protégé par des soufflets. De plus, des tôles sont situées en amont des soufflets pour aussi les protéger. Le corps du vérin est en outre protégé par une tôle. Les roulements de rotation du noyau portant les bras sont protégés par des joints spi à double lèvres.

Pour décaper la conduite, on utilise des outils utilisant de l'eau à ultra haute pression (UHP) ou des particules abrasives avec de l'air sous pression. Pour ces deux méthodes de décapage, on met en oeuvre des buses associées à des flexibles. Le décapage en UHP consiste à envoyer à l'aide d'un groupe équipé d'une pompe et à travers des outils comportant chacun une tête de buse de l'eau à une pression d'environ 3000 bars. Cette phase a pour objectif de retirer toute la peinture. Pour travailler efficacement, la tête de buse doit se trouver à une distance d'environ 5 cm de la surface à traiter. Les trois buses dans le cas du chariot porte-outils représenté sont réparties avec un angle de 120° entre elles. Un système de réglage rapide de la position de la buse le long du bras radial est mis en oeuvre. Dans l'exemple représenté, les bras ont une longueur fixe et la buse est au bout d'un tube métallique résistant à la pression de 3000 bars et qui peut être déplacé le long du bras. Le tube est fixé au bras à l'aide de colliers « stauff ». Les trois buses et leurs tubes métalliques sont reliés au groupe UHP par l'intermédiaire de flexibles et de raccords.
En alternative ou complément du décapage UHP, la projection d'abrasif permet de nettoyage des surfaces en utilisant un abrasif projeté à grande vitesse au travers d'une buse à l'aide d'air comprimé. Il permet de retirer la calamine et d'obtenir une certaine rugosité de la surface pour l'application ultérieure de la peinture. Pour réaliser une projection d'abrasif, il faut utiliser un compresseur d'air, une sableuse ou équivalent, des flexibles, un répartiteur ainsi que d'une ou plusieurs buses de projection qui sont sur les bras radiaux du noyau. Le répartiteur permet de répartir le flux d'air et d'abrasif unique vers les différentes buses d'une manière homogène entre les différentes buses. La projection d'abrasif doit être réalisée avec la buse située entre 5 et 20 cm de la surface à traiter. Le choix se fait en fonction de l'état de surface souhaité et de l'état de la surface d'origine. Comme dans le cas des buses UHP, les buses pour la projection d'abrasif sont au bout de tubes fixés aux bras à l'aide de colliers « STAUFF® », ce qui permet leur réglage en position le long des bras et/ou leur remplacement par des buses et tubes UHP.
A noter qu'un répartiteur spécial a été réalisé pour avoir un mélange plus homogène air/abrasif et une usure plus faible des particules abrasives. En effet, sur les répartiteurs classiques, le flux d'air et d'abrasif arrivant de la source (compresseur et sableuse ou équivalent) par l'entrée du répartiteur est stoppé ou a tout le moins ralenti au niveau de la « boite à sable » du répartiteur et doit remonter pour aller vers les sorties dudit répartiteur.
La « boite à sable » classiquement utilisée dans les répartiteurs connus est une astuce en projection d'abrasif. Les particules d'abrasif sont très abrasives et au lieu de laisser l'abrasif taper directement les parois du répartiteur, on fait en sorte qu'un matelas de particules abrasives apparaisse. De ce fait, l'abrasif arrivant de l'entrée vient rebondir sur l'abrasif dudit matelas au lieu des parois du répartiteur ce qui permet de le préserver. Cependant, cette forme de répartiteur entraîne une usure de l'abrasif et il est donc moins efficace pour le décapage puisque l'abrasif a déjà subi une abrasion alors qu'il n'a pas encore atteint la surface à traiter.

Il est donc mis en oeuvre un répartiteur qui limite l'usure de l'abrasif avant son utilisation finale sur la paroi à traiter. A cette fin, les parois internes du répartiteur sont recouvertes d'une couche d'un élastomère particulièrement résistant, du « linatex® » en l'espèce. Le « linatex® » est un caoutchouc très résistant à l'abrasion.

Bien entendu la présente invention n'est pas limitée aux modes de réalisation particuliers qui viennent d'être décrits.

## Revendications

1. Système d'entretien de la paroi intérieure d'une conduite, le système comportant un chariot porte-outils (1) et un ensemble de câbles (3, 5, 7) étendus entre ledit chariot et des treuils (4, 6, 8) d'extrémités amont et aval de ladite conduite, lesdits câbles permettant des déplacements du chariot dans ladite conduite, **caractérisé en ce que** ledit chariot comporte un support avant (17) à son extrémité avant, un support arrière (14) à son extrémité arrière et une poutre (15) allongée étendue entre les supports avant et arrière, un noyau (16) comportant des bras (19) radiaux portant des outils (20) d'entretien étant placé sur la poutre, le noyau pouvant se déplacer en translation le long de la poutre grâce à un moyen de déplacement de noyau, les supports avant et arrière comportant des pieds (23) avec des moyens de roulement (24), ledit noyau comportant en outre des moyens permettant sa rotation autour de la poutre afin que les outils puissent balayer radialement la paroi interne sur sa circonférence, l'action des câbles permettant un positionnement grossier des outils par positionnement du chariot le long de la conduite et le déplacement du noyau le long de la poutre permettant un positionnement précis des outils le long de la paroi.

2. Système selon la revendication 1, **caractérisé en ce que** la poutre (15) est rigide et est reliée aux supports avant et arrière par l'intermédiaire d'une liaison à cardan (32) avant et d'une liaison à cardan arrière.

3. Système selon la revendication 1 ou 2, **caractérisé en ce que** la position de la poutre par rapport aux supports avant et arrière est réglable au moins en hauteur, un vérin (25) avant étant disposé dans le support avant et un vérin (25) arrière étant disposé dans le support arrière, la partie mobile réglable du vérin étant reliée à la poutre.

4. Système selon la revendication 1, 2 ou 3, **caractérisé en ce que** chaque support comporte quatre pieds (23) ayant chacun au moins une roulette (24) à son extrémité, lesdites roulettes étant disposées aux quatre coins d'un quadrilatère se trouvant coté inférieur du support et débordant au moins latéralement dudit support.

5. Système selon l'une quelconque des revendications précédentes, **caractérisé en ce que** la position radiale des outils (20) par rapport au noyau (16) est réglable (21) afin de pouvoir régler la distance des outils par rapport à la paroi intérieure de la conduite.

6. Système selon l'une quelconque des revendications précédentes, **caractérisé en ce que** le support arrière (14) comporte un boîtier de contrôle (26) du fonctionnement dudit système et comportant une télécommande.

7. Système selon l'une quelconque des revendications précédentes, **caractérisé en ce que** le support arrière (14) est relié par un câble de traction (5) à un treuil de traction (6) amont et par un câble de secours (3) à un treuil de secours (4) amont, et **en ce que** le support avant (17) est relié par un câble de tension (7) à un treuil de tension aval, ledit treuil de tension aval assurant une tension sensiblement constante audit câble de tension.

8. Système selon l'une quelconque des revendications précédentes, **caractérisé en ce que** le noyau comporte un nombre N de bras (19) radiaux, N étant supérieur ou égal à un, et que les moyens permettant la rotation dudit noyau autour de la poutre permettent des mouvements de rotation en va et vient d'une amplitude angulaire d'environ 360°/N, de préférence, N étant égal à 3 et l'amplitude angulaire de la rotation en va et vient étant alors d'environ 120 °.

9. Système selon l'une quelconque des revendications précédentes, **caractérisé en ce que** les outils (20) sont soit des lances de projection d'eau à ultra haute pression, soit des lances de projection d'abrasif.

10. Procédé de fonctionnement d'un système d'entretien de la paroi intérieure d'une conduite, ledit système comportant un chariot porte outil (1) et un ensemble de câbles (3, 5, 7) étendus entre ledit chariot et des treuils (4, 6, 8) d'extrémités amont et aval de ladite conduite, lesdits câbles permettant des déplacements du chariot dans ladite conduite, **caractérisé en ce que** l'on met en oeuvre le système de l'une quelconque des revendications précédentes avec un chariot comportant un support avant à son extrémité avant, un support arrière à son extrémité arrière et une poutre allongée étendue entre les supports avant et arrière, un noyau comportant des bras radiaux portant des outils d'entretien étant placé sur la poutre, le noyau pouvant se déplacer le long de la poutre grâce à un moyen de déplacement de noyau, les supports avant et arrière comportant des pieds avec des moyens de roulement, ledit noyau comportant en outre des moyens permettant sa rotation autour de la poutre afin que les outils puissent balayer la paroi interne sur sa circonférence, et **en ce que** l'on agit sur les câbles pour assurer un positionnement grossier des outils par positionnement du chariot le long de la conduite et **en ce que** on assure un positionnement précis des outils le long de la paroi par déplacement du noyau le long de la poutre.

## Patentansprüche

1. Vorrichtung zur Wartung der Innenfläche einer Leitung, wobei die Vorrichtung einen Werkzeugtragwagen (1) und eine Gesamtheit von Kabeln (3, 5, 7) umfasst, die zwischen dem Wagen und Endwinden (4, 6, 8) stromaufwärts und stromabwärts zur Leitung ausgelegt sind, wobei die Kabel Bewegungen des Wagens in der Leitung ermöglichen, **dadurch gekennzeichnet**, der Wagen eine vordere Stütze (17) an seinem vorderen Ende, eine hintere Stütze (14) an seinem hinteren Ende und einen länglichen Träger (15) umfasst, der sich zwischen der vorderen und der hinteren Stütze erstreckt, wobei ein Kern (16), der radiale Arme (19) umfasst, die Wartungswerkzeuge (20) tragen, auf dem Träger anbeordnet ist, wobei sich der Kern in Translation entlang des Trägers dank eines Mittels zur Bewegung des Kerns bewegen kann, wobei die vordere und die hintere Stütze Füße (23) mit Fahrhilfsmitteln (24) umfassen, wobei der Kern ferner Mittel umfasst, die seine Drehung um den Träger ermöglichen, damit die Werkzeuge die Innenfläche auf ihrem Umfang radial abfahren können, wobei die Tätigkeit der Kabel eine grobe Positionierung der Werkzeuge durch Positionierung des Wagens entlang der Leitung und die Bewegung des Kerns entlang des Trägers eine genaue Positionierung der Werkzeuge entlang der Innenfläche ermöglicht.

2. Vorrichtung nach Anspruch 1, **dadurch gekennzeichnet, dass** der Träger (15) starr ist und mit den vorderen und hinteren Stützen mit Hilfe einer vorderen Kardanverbindung (32) und einer hinteren Kardanverbindung verbunden ist.

3. Vorrichtung nach Anspruch 1 oder 2, **dadurch gekennzeichnet, dass** die Position des Trägers in Bezug zu der vorderen und hinteren Stütze zumindest in der Höhe einstellbar ist, wobei ein vorderer Zylinder (25) in der vorderen Stütze und ein hinterer Zylinder (25) in der hinteren Stütze angeordnet ist, wobei der einstellbare bewegliche Teil des Zylinders mit dem Träger verbunden ist.

4. Vorrichtung nach Anspruch 1, 2 oder 3, **dadurch gekennzeichnet, dass** jede Stütze vier Füße (23) umfasst, die jeweils mindestens eine Rolle (24) an ihrem Ende aufweisen, wobei die Rollen an den vier Ecken eines Vierecks angeordnet sind, das sich auf der Unterseite der Stütze befindet und zumindest seitlich über die Stütze hinausragt.

5. Vorrichtung nach einem der vorhergehenden Ansprüche, **dadurch gekennzeichnet, dass** die radiale Position Unterseite der Werkzeuge (20) in Bezug zum Kern (16) einstellbar (21) ist, um den Abstand der Werkzeuge zur Innenfläche der Leitung einstellen zu können.

6. Vorrichtung nach einem der vorhergehenden Ansprüche, **dadurch gekennzeichnet, dass** die hintere Stütze (14) ein Gehäuse (26) zur Steuerung der Funktion der Vorrichtung, umfassend eine Femsteuerung, umfasst.

7. Vorrichtung nach einem der vorhergehenden Ansprüche, **dadurch gekennzeichnet, dass** die hintere Stütze (14) durch ein Zugkabel (5) mit einer Zugwinde (6) stromaufwärts und durch ein Hilfskabel (3) mit einer Hilfswinde (4) stromaufwärts verbunden ist, und dass die vordere Stütze (17) durch ein Spannkabel (7) mit einer Spannwinde stromabwärts verbunden ist, wobei die stromabwärtige Spannwinde eine im Wesentlichen konstante Spannung des Spannkabels gewährleistet.

8. Vorrichtung nach einem der vorhergehenden Ansprüche, **dadurch gekennzeichnet, dass** der Kern eine Anzahl N von radialen Armen (19) umfasst, wobei N größer oder gleich eins ist, und dass die Mittel, die die Drehung des Kerns um den Träger ermöglichen, Hin- und Herdrehbewegungen mit einer Winkelamplitude von vorzugsweise ungefähr 360°/N ermöglichen, wobei N gleich 3 ist Ende und die Winkelamplitude der Hin- und Herdrehung somit ungefähr 120° beträgt.

9. Vorrichtung nach einem der vorhergehenden Ansprüche, **dadurch gekennzeichnet, dass** die Werkzeuge (20) entweder Spritzrohre für Wasser unter ultrahohem Druck oder Spritzrahre für Schleifmittel sind.

10. Betriebsvertahren einer Vorrichtung zur Wartung der Innenfläche einer Leitung, wobei die Vorrichtung einen Werkzeugtragwagen (1) und eine Gesamtheit von Kabeln (3, 5, 7), die zwischen dem dem Wagen und Endwinden (4, 6, 8) stromaufwärts und stromabwärts zu der Leitung ausgelegt sind, umfasst, wobei die Kabel Bewegungen des Wagens in der Leitung ermöglichen, **dadurch gekennzeichnet, dass** die Vorrichtung nach einem der vorhergehenden Ansprüche mit einem dem Wagen eingesetzt wird, umfassend eine vordere Stütze an seinem vorderen Ende, eine hintere Stütz an seinem hinteren Ende und einen länglichen Träger, der sich zwischen der vorderen und der hinteren Stütze erstreckt, wobei ein Kern, der radiale Arme umfasst, die Wartungswerkzeuge tragen, auf dem Träger angeordnet ist, wobei sich der Kern entlang des Trägers dank eines Mittels zum Bewegen des Kerns bewegen kann, wobei die vordere und die hintere Stütze Füße mit Fahrhilfsmitteln umfassen, wobei der Kern ferner Mittel umfasst, die seine Drehung um den Träger ermöglichen, damit die Werkzeuge die Innenwand auf ihrem Umfang abfahren können, und dass die Kabel derart betätigt werden, dass sie eine Positionierung der Werkzeuge durch Positionierung des Wagens entlang der Leitung gewährleisten, und dass eine genaue Positionierung der Werkzeuge entlang der Innenfläche durch Bewegung des Kerns entlang des Trägers gewährleistet wird.

## Claims

1. A system for maintenance of the inner wall of a pipe, the system including a tool carriage (1) and a set of tables (3, 5, 7) extending between said carriage and wenches (4, 6, 8) at upstream and downstream ends of said pipe, said cables allowing movements of the carriage in said pipe, **characterized in that** said carriage includes a front support (17) at its front end, a rear support (14) at its rear end, and an elongated beam (15) extending between said front and rear supports, a core (16) including radial arms (19) carrying maintenance tools (20) being placed on the beam, the core being able to move in translation along the beam thanks to a core moving means, the front and rear supports including feet (23) with rolling means (24), said core further including means for its rotation around the beam so that the tools can radially sweep the inner wall over the circumference thereof, the operation of the cables allowing a coarse positioning of the tools by positioning the carriage along the pipe and the moving of the core along the beam allowing a precise positioning of the tools along the wall.

2. The system according to claim 1, **characterized in that** the beam (15) is rigid and is linked to the front and rear supports by means of a front cardan joint (32) and a rear cardan joint.

3. The system according to claim 1 or 2, **characterized in that** the position of the beam with respect to the front and rear supports is adjustable at least in height, a front cylinder (25) being arranged in the front support and a rear cylinder (25) being arranged in the rear support, the adjustable mobile part of the cylinder being connected to the beam.

4. The system according to claim 1, 2 or 3, **characterized in that** each support includes four feet (23), each having at least one roller (24) at its end, said rollers being arranged at the four corners of a quadrilateral located on the lower side of the support and projecting at least laterally from said support.

5. The system according to any one of the preceding claims, **characterized in that** the radial position of the tools (20) with respect to the core (16) is adjustable (21) so that the distance of the tools with respect to the inner wall of the pipe can be adjusted.

6. The system according to any one of the preceding claims, **characterized in that** the rear support (14) includes a control unit (26) for controlling the operation of said system and comprising a remote-control.

7. The system according to any one of the preceding claims, **characterized in that** the rear support (14) is connected by a traction cable (5) to an upstream traction winch (6) and by an emergency cable (3) to an upstream emergency winch (4), and **in that** the front supports (17) is connected by a tension cable (7) to a downstream tension winch, said downstream tension winch providing a substantially constant tension to said tension cable.

8. The system according to any one of the preceding claims, **characterized in that** the core includes a number N of radial arms (19), N being higher or equal to one, and **in that** the means for the rotation of said core around the beam allow reciprocating rotational movements of angular amplitude of about 360%N, N being preferably equal to 3 and the angular amplitude of the reciprocating rotation being then of about 120°C.

9. The system according to any one of the preceding claims, **characterized in that** the tools (20) are either high pressure water jet nozzles or abrasive jet nozzles.

10. A method of operation of a system for maintenance of the inner wall of a pipe, said system including a tool carriage (1) and a set of cables (3, 5, 7) extending between said carriage and winches (4, 6, 8) at upstream and downstream ends of said pipe, said cables allowing movements of the carriage in said pipe, **characterized in that** the system of any one of the preceding claims is implemented with a carriage including a front support at its front end, a rear support at its rear end, and an elongated beam extending between said front and rear supports, a core including radial arms carrying maintenance tools being placed on the beam, the core being able to move in translation along the beam thanks to a core moving means, the front and rear supports including feet with rolling means, said core further including means for its rotation around the beam so that the tools can radially sweep the inner wall over the circumference thereof, and **in that** the cables are operated to provide a coarse positioning of the tools by positioning the carriage along the pipe and **in that** a precise positioning of the tools along the wall is provided by moving the core along the beam.
